# EUROPEAN PATENT APPLICATION

(11) **EP 1 291 704 A1**
(43) Date of publication of application: **12.03.2003**
(21) Application number: 01932156.1
(22) Date of filing: 21.05.2001
(51) Int. Cl.: G02F 1/13

(54) **CONTRAST RATIO IMPROVING METHOD FOR LIQUID CRYSTAL PROJECTOR**

(30) Priority: 22.05.2000 JP 2000149539
(71) Applicant: Nippon Kayaku Kabushiki Kaisha, Tokyo 102-8172 (JP); Polatechno Co., Ltd, Tokyo 102-8172 (JP)
(72) Inventor: YOSHIOKA, Kenichiro, Kita-ku, Tokyo 115-0042 (JP); TORIGOE, Michiko, Kita-ku, Tokyo 114-0003 (JP); TANAKA, Kouichi, Kita-ku, Tokyo 115-0042 (JP)
(74) Representative: Gille Hrabal Struck Neidlein Prop Roos
(86) International application number: JP0104209
(87) International publication number: WO01090808

(57) **Abstract**

The invention provides a method for improving the contrast ratio of the display image projected on a screen from a liquid crystal projector that comprises at least a light source, an electrode-having, twisted nematic liquid crystal cell comprising at least one nematic liquid crystal, and two polarizers disposed so that the liquid crystal cell is sandwiched between them, which is characterized in that at least two HBLC optical films are so arrayed between the polarizers that the slow axes of the films are approximately perpendicular to each other so as not to cause a retardation in the direction normal to the film surfaces; and provides a liquid crystal projector that uses the improving method.

## Description

### TECHNICAL FIELD

The present invention relates to a method for improving the contrast ratio of the display image in a liquid crystal projector, and to a liquid crystal projector that uses the method.

### BACKGROUND ART

A liquid crystal projector that comprises active-driving twisted nematic liquid crystal cells with TFTs (thin film transistors) or the like therein (this is hereinafter simply referred to as a liquid crystal projector) is small-sized, lightweight and easy to carry and enables wide-screen displays, and it has become much popularized for wide-screen televisions and for image display devices suitable to the place where many people gather. An image according to such a liquid crystal projector is often influenced by external light around it since the image to be seen was projected on a screen. Therefore, as compared with a liquid crystal display with a backlight in which the light emitted by the light emitter is directly seen, for example, as in notebook-size personal computers or monitors, the liquid crystal projector is required to give images having a higher contrast ratio.

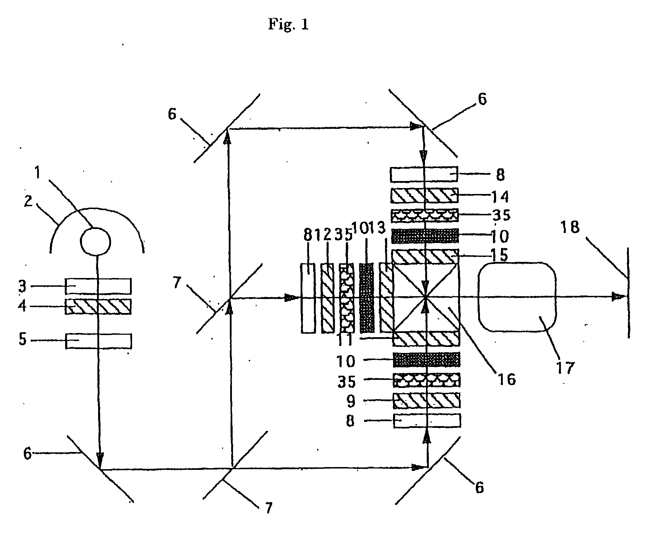

Fig. 1 shows one example of a conventional liquid crystal projector, illustrating the constitution of a three-cell liquid crystal projector. In Fig. 1, the light emitted by a light source 1 is polarized through a polarized beam splitter (PBS) 4 via a first integrator lens 3. Next, the polarized light having passed through a second integrator lens 5 is reflected by a total reflection mirror 6, and then separated by two dichroic mirrors 7 into polarized components that correspond to the respective wavelength regions of red, green and blue. Of the thus-separated polarized components, one that corresponds to a red region is reflected by a total reflection mirror 6, then condensed by a condenser lens 8, and goes into a color elliptical polarizer 9 that polarizes the light to a wavelength region corresponding to a red region (the retardation film for it is disposed on the side adjacent to the condenser lens 8). The polarized light that has been linearized by the color elliptical polarizer 9 is then collected by a microlens array 35, and goes into a twisted nematic liquid crystal cell 10 that comprises a pair of transparent substrates and a nematic liquid crystal sandwiched by the substrates and has a TFT circuit. For light display in that condition, the light having passed through the cell 10 further passes through a color elliptical polarizer 11 (the retardation film for it is disposed on the side adjacent to a cross prism) to go into a cross prism 16, in which its running course is changed by 90° toward a projection lens 17, and it is combined with the other polarized components in the lens 17 to form an image, and the thus-formed image is projected on a screen 18. Like that corresponding to the red region, the polarized light that corresponds to a blue region passes through a liquid crystal cell 10 with color elliptical polarizers 14 and 15 and a microlens array 35 disposed therearound, and goes into the cross prism 16 in which its running course is changed by 90° toward the projection lens 17, and it is combined with the other polarized components in the lens 17 to from an image, and the thus-formed image is projected on the screen 18. Like the two, the polarized light in a green region also passes through a liquid crystal cell 10 with color elliptical polarizers 12 and 13 and a microlens array 35 disposed therearound, but it runs straightly through the cross prism toward the projection lens 17 without its running direction being changed in the cross prism, and it is combined with the other polarized components in the lens 17 to from an image, and the thus-formed image is projected on the screen 18.

Having the complicated light pathways, the liquid crystal projector collects the light components having finally passed through the light-emitting elliptical polarizers, via the lens to form an image therein, and projects the thus-formed image on the screen. In this stage, the contrast of the image to be projected on the screen is representd by the parameters of the total light collected in the lens. Concretely, the polarized light components having passed through the respective liquid crystal cells at different angles further pass through the respective light-emitting polarizers, and then they are combined in the lens and projected on the screen. However, in the case of black state with twisted nematic liquid crystal cells by voltage application thereto in a normally white mode, the orientation of the liquid crystal molecules in each liquid crystal cell is not completely symmetric. Concretely, even under voltage application to the liquid crystal cells, the liquid crystal molecules around the interface of the alignment layer in each cell are oriented slightly oblique to the interface of the alignment layer. In that condition, therefore, some polarized light components that differ from the polarized light components to be obtained in the front direction of the projector will pass through the liquid crystal cells, depending on the incident angle of the polarized light that enters each liquid crystal cell, and they will be emitted out. Accordingly, depending on the incident angle of the polarized light to enter the liquid crystal cells, the light-emitting polarizers could not completely absorb all the polarized lights having gone out of the liquid crystal cells, and the projector could not give completely black state. As so mentioned above, even the light components that could not be completely absorbed by the light-emitting polarizers are combined with all the other light components in a liquid crystal projector, and, as a result, the black state of the entire image projected by the projector could not be complete and the contrast ratio of the image is difficult to increase. This is one problem with the liquid crystal projector. This problem is especially serious in the liquid crystal projector of the type of Fig. 1, in which microlens arrays are disposed so as to prevent efficiency of the light utilization from lowering in the TFT area of the TFT circuit-having twisted nematic liquid crystal cells. In this, the microlens arrays act to collect the polarized light components therein, and the thus-collected light is led into the respective liquid crystal cells and then projected onto a screen. Given that situation, it is desired to improve the contrast ratio of the image to be projected by such a liquid crystal projector.

In a liquid crystal display having twisted nematic liquid crystal cells therein, in which the light from the light source is directly seen to recognize the image formed therein, the problem with the display image is that its contrast ratio lowers and its color hue varies depending on the site at which the image is seen, or that is, the problem is caused by the viewing angle dependency of display images. Different from it, the problem with the projected image in that its contrast ratio lowers is peculiar to liquid crystal projectors and its solution is desired.

### DISCLOSURE OF THE INVENTION

We, the present inventors have assiduously studied so as to solve the problem, and, as a result, have found that, in a liquid crystal projector that comprises at least a light source, an electrode-having, twisted nematic liquid crystal cell filled with nematic liquid crystal, and two polarizers disposed so that the liquid crystal cell is sandwiched between them, when at least two, hybrid-oriented liquid crystal layer-having optical films are so disposed between the polarizers that the slow axes of the films are approximately perpendicular to each other so as not to cause a retardation in the direction normal to the film surfaces, then the contrast ratio of the image to be projected by the liquid crystal projector can be significantly improved (increased).

Specifically, the invention provides the following:
(1) A method for improving the contrast ratio of the display image projected on a screen from a liquid crystal projector that comprises at least a light source, an electrode-having, twisted nematic liquid crystal cell (hereinafter referred to as a TN liquid crystal cell), and two polarizers disposed so that the liquid crystal cell is sandwiched between them, which is characterized in that at least two, hybrid-oriented liquid crystal layer-having optical films (hereinafter referred to as HBLC optical films) are so arrayed between the polarizers that the slow axes of the films are approximately perpendicular to each other so as not to cause a retardation in the direction normal to the film surfaces;
(2) The contrast ratio improving method of above (1), wherein at least two HBLC optical films are so arrayed that their slow axes are approximately parallel or perpendicular to the absorption axis of each polarizer;
(3) The contrast ratio improving method of above (2), wherein even numbers of HBLC optical films are so arrayed that the slow axes of a half of them are approximately perpendicular to the absorption axis of one polarizer and those of the other half of them are approximately parallel to the absorption axis of that polarizer;
(4) The contrast ratio improving method of above (3), wherein even numbers of HBLC optical films are so arrayed that the slow axes of a half of them are approximately perpendicular to the absorption axis of one polarizer and those of the other half of them are approximately parallel to the absorption axis of that polarizer, and each half of the optical films are so arrayed that the liquid crystal layer and the base film to support the liquid crystal layer of each optical film are alternated;
(5) The contrast ratio improving method of any one of above (1) to (4), wherein the HBLC optical films have the same retardation value;
(6) The method for improving the contrast ratio of the display image projected on a screen of above (1), wherein at least two, planar-oriented liquid crystal layer-having optical films (hereinafter referred to as PLLC optical films) are so arrayed between the polarizers that the slow axes of the films are approximately perpendicular to each other so as not to cause a retardation in the direction normal to the film surfaces, and that they are approximately parallel or perpendicular to the slow axes of the HBLC optical films;
(7) The contrast ratio improving method of above (6), wherein at least two PLLC optical films are so arrayed that their slow axes are approximately parallel or perpendicular to the absorption axis of each polarizer;
(8) The contrast ratio improving method of above (7), wherein even numbers of PLLC optical films are so arrayed that the slow axes of a half of them are approximately perpendicular to the absorption axis of one polarizer and those of the other half of them are approximately parallel to the absorption axis of that polarizer, and the HBLC optical films and the PLLC optical films sandwiched between the TN liquid crystal cell and one polarizer are so arrayed that the liquid crystal layer and the base film to support the liquid crystal layer of each optical film are alternated;
(9) The contrast ratio improving method of any one of above (6) to (8), wherein the PLLC optical films have the same retardation value;
(10) The contrast ratio improving method of any one of above (1) to (9), wherein the base film to support the liquid crystal layer satisfies nx ≥ ny > nz, and nz - {(nx + ny)/2} < 0, in which nx represents the refractive index of the film in the direction of the slow axis in the film surface, nyrepresents the refractive index of the film in the direction of the fast axis in the film surface, and nz represents the refractive index of the film in the direction of the thickness of the film;
(11) The contrast ratio improving method of above (10), wherein the base film to support the liquid crystal layer is a triacetyl cellulose film;
(12) The contrast ratio improving method of any one of above (1) to (9), wherein the compound to form the liquid crystal layer is a thermotropic liquid crystalline compound or a lyotropic liquid crystalline compound;
(13) The contrast ratio improving method of above (12), wherein the compound to form the liquid crystal layer is a UV-curable or thermosetting liquid crystalline compound;
(14) A liquid crystal projector that uses the contrast ratio improving method of above (1) to (13);
(15) An optical system for improving the contrast ratio of the display image projected on a screen from a liquid crystal projector, which has a TN liquid crystal cell and at least two HBLC optical films between polarizers and which is characterized in that the films are so arrayed that their slow axes are approximately perpendicular to each other so as not to cause a retardation in the direction normal to the film surfaces;
(16) A composite optical film for contrast ratio improvement, which comprises at least a pair of HBLC optical films and a pair of PLLC optical films.

### BRIEF DESCRIPTION OF THE DRAWINGS

Fig. 1 shows one example of a conventional liquid crystal projector.
Fig. 2 shows one example of the contrast ratio improving method of the invention.
Fig. 3 shows another example of the contrast ratio improving method of the invention.
Fig. 4 shows still another example of the contrast ratio improving method of the invention.
Fig. 5 shows still another example of the contrast ratio improving method of the invention.
Fig. 6 shows still another example of the contrast ratio improving method of the invention.
Fig. 7 shows one embodiment of the liquid crystal projector of Example 1.
Fig. 8 shows still another example of the contrast ratio improving method of the invention.
Fig. 9 shows another embodiment of the liquid crystal projector of Example 3.

### Description of Reference Numerals:

1: Light source
2: Reflector
3: First integrator lens
4: Polarized beam splitter
5: Second integrator lens
6: Total reflection mirror
7: Dichroic mirror
8: Condenser lens
9: Light-receiving color elliptical polarizer for red region
10: Liquid crystal cell
11: Light-emitting color elliptical polarizer for red region
12: Light-receiving color elliptical polarizer for green region
13: Light-emitting color elliptical polarizer for green region
14: Light-receiving color elliptical polarizer for blue region
15: Light-emitting color elliptical polarizer for blue region
16: Cross prism
17: Projection lens
18: Screen
19: Incident light
20: Light-receiving polarizer
21: Absorption axis
22: Rubbing direction
23: liquid crystal molecules in liquid crystal cell
24: Hybrid-oriented liquid crystal layer
25: Hybrid-oriented liquid crystal molecules
26: Base film
27: Hybrid-oriented liquid crystal layer-having optical film (HBLC optical film)
28: Light-emitting polarizer
29: Slow axis of hybrid-oriented liquid crystal layer
30: Planar-oriented liquid crystal layer
31: Planar-oriented liquid crystal molecules
32: Slow axis of planar-oriented liquid crystal layer
33: Planar-oriented liquid crystal layer-having optical film (PLLC optical film)
34: Optical film or optical structure laminated with liquid crystal layer-having optical films used in the invention
35: Microlens array

### BEST MODES OF CARRYING OUT THE INVENTION

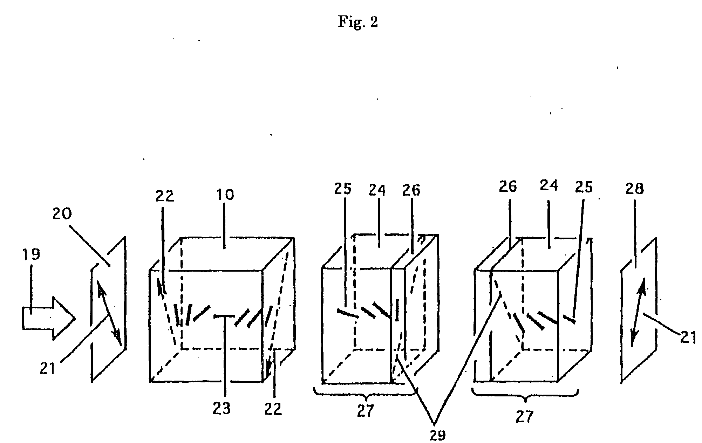

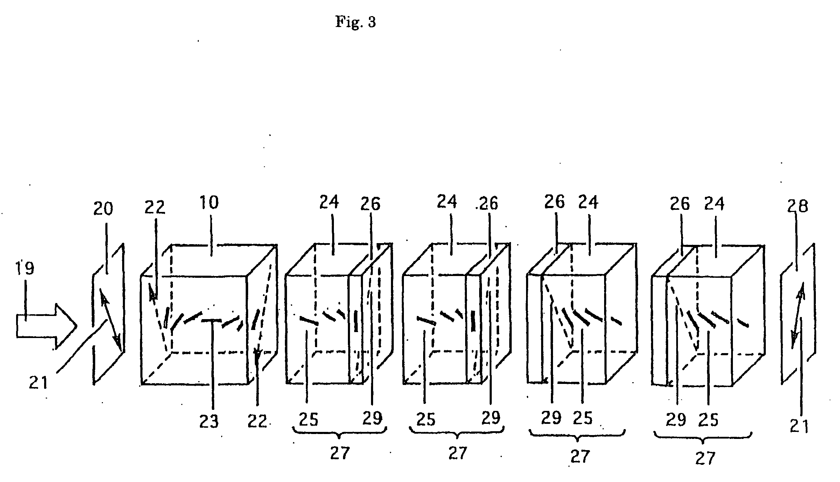

Fig. 2 shows one example of the contrast ratio improving method of the invention. Hybrid orientation in the hybrid-oriented liquid crystal layer-having optical films (HBLC optical films) that are used in the contrast ratio improving method of the invention means that, in the liquid crystal layer 24 (layer of a liquid crystalline compound) on the base film 26 that supports the liquid crystal layer, the liquid crystal molecules 25 that constitute the liquid crystal layer are approximately planarly oriented (in parallel to the base film surface) on the side of the base film but are homeotropically oriented (perpendicularly to the base film surface) on the side of the interface with air so that the orientation of the liquid crystal molecules is in continuous change in that manner, for example, as shown in Fig. 2. In case where two HBLC optical films 27 are used in the invention, they are so arrayed that their slow axes 29 do not cause a retardation in the direction normal to the optical films surfaces. For that array, for example, referred to is the constitution of Fig. 2 in which the polarizer 20, the liquid crystal cell 10, two HBLC optical films 27 and the light-emitting polarizer 28 are arrayed in that order relative to the incident light 19. In this constitution, the optical films 27 are made to have the same retardation value, and are arrayed so that the slow axes 29 of the two films are perpendicular to each other. When three optical films are used, for example, they are so selected that one of them has a predetermined retardation value while the other two both have a half of the retardation value of that one. Thus selected, the two optical films having a lower retardation value are so arrayed that their slow axes 29 are parallel to each other, and the remaining one having a higher retardation value is so arrayed that its slow axis 29 is perpendicular to the slow axes of the other two films. When four optical films are used, for example, they are so selected that they all have the same retardation value and are arrayed as shown in Fig. 3, in which the slow axes 29 of two optical films 27 are parallel to each other while the slow axes 29 of the remaining two optical films 27 are parallel to each other but perpendicular to the slow axes 29 of the former two optical films of which the slow axes 29 are parallel to each other. Regarding the accuracy of the angle of the slow axis 29 of each HBLC optical film to be arrayed in the manner as above, the slow axes thereof are preferably approximately parallel or perpendicular to each other not overstepping a range of from -3 to +3°, more preferably from -2 to +2° of the completely parallel or perpendicular position thereof, in view of the degree of orientation uniformity of the hybrid-oriented liquid crystal layers of the optical films and of the accuracy in arraying the films.

Also preferably in the invention, at least two HBLC optical films are so arrayed that their slow axes are approximately parallel or perpendicular to the absorption axis of each polarizer. One example of this embodiment is shown in Fig. 2, in which the slow axis 29 of the optical film 27 nearer to the polarizer 20 is made perpendicular to the absorption axis 21 of the polarizer 20, while the slow axis 29 of the optical film 27 nearer to the polarizer 28 is made perpendicular to the absorption axis 21 of the polarizer 28. Thus arrayed, the optical films do not suffer a retardation in the direction normal to the surface of each optical film. Therefore, for example, two optical films each having a different retardation value may be so arrayed that their slow axes 29 are approximately parallel or perpendicular to the absorption axis 21 of each polarizer to thereby improve the contrast ratio of the image to be formed. Regarding the accuracy of the angle of the slow axis 29 of each optical film to the absorption axis 21 of the polarizer 20 or 28 in arraying the optical films in the manner as above, the slow axes of the optical films are preferably approximately parallel or perpendicular to the absorption axis of each polarizer not overstepping a range of from -5 to +5°, more preferably from -3 to +3°, even more preferably from -2 to +2° of the completely parallel or perpendicular position thereof, in view of the degree of orientation uniformity of the hybrid-oriented liquid crystal layers of the optical films and of the accuracy in arraying the films.

If desired in the invention, at least two, especially at least four even numbers of HBLC optical films all having the same retardation value may be used, and they are preferably so arrayed that the slow axes of a half of them are approximately perpendicular to the absorption axis of one polarizer and those of the other half of them are approximately parallel to the absorption axis of that polarizer in order that the thus-arrayed optical films do not suffer a retardation in the direction normal to the film surfaces. One example of this embodiment of using such four HBLC optical films 27 is shown in Fig. 3, in which the slow axes 29 of the two optical films 27 nearer to the polarizer 28 are made perpendicular to the absorption axis 21 of the polarizer 28, while the slow axes 29 of the remaining two optical films 27 are made parallel to the absorption axis 21 of the polarizer 28.

Next described is the direction in which at least two HBLC optical films are arrayed in the invention. Some preferred embodiments of the direction of the optical films are described below, to which, however, the direction of the optical films is not limited.

In case where two HBLC optical films are arrayed in the invention, in general, it is desirable that the same surfaces of the two films face each other so that the hybrid orientation in the two films may be in continuous change. For example, the liquid crystal layers of the two films may face each other; or contrary to this, the film layers thereof may face each other. In general, however, the optical films are preferably so arrayed that their film layers face each other. In this case, the two optical films may neighbor each other as shown in Fig. 2; or a TN liquid cell and any other light-transmitting film may be disposed between them.

In case where three or more HBLC optical films are arrayed in the invention, in general, those that may cancel their retardation are arrayed to face each other in the opposite direction (in such amanner that the same surfaces of, for example, the liquid crystal layers or the film layers of the optical films face each other). For example, when three optical films are arrayed, two of them having a lower retardation value may be arrayed to face each other in the same direction, while the other one having a higher retardation value comes to face to face in the film layers or the liquid crystal layers.

When four or more even numbers of HBLC optical films, preferably those having the same retardation value are arrayed, it is desirable that they are so arrayed that the slow axes of a half of them are approximately perpendicular to the absorption axis of one polarizer and those of the other half of them are approximately parallel to the absorption axis of that polarizer, and each half of the optical films are so arrayed that the liquid crystal layer and the base film to support the liquid crystal layer of each optical film are alternated. One example of this embodiment is, for example, as shown in Fig. 3, in which two of four HBLC optical films 27 that are nearer to the liquid crystal cell 10 are so arrayed that their base films 26 face the polarizer 28 and their slow axes 29 are parallel to the absorption axis 21 of the polarizer 28, while the remaining two of them are so arrayed that their liquid crystal layers 24 face the polarizer 28 and their slow axes 29 are perpendicular to the absorption axis 21 of the polarizer 28.

Preferably, the HBLC optical films for use in the invention all have the same retardation value for more effectively improving the contrast ratio of the image to be formed. The preferred retardation value of each one of the optical films falls between 20 and 150 nm, more preferably between 30 and 100 nm or so in the direction normal to the film surface.

The retardation value of each optical film may be measured in any ordinary method, for example, by rotational analysis with a spectrophotometer or by the use of an automatic birefringence refractometer.

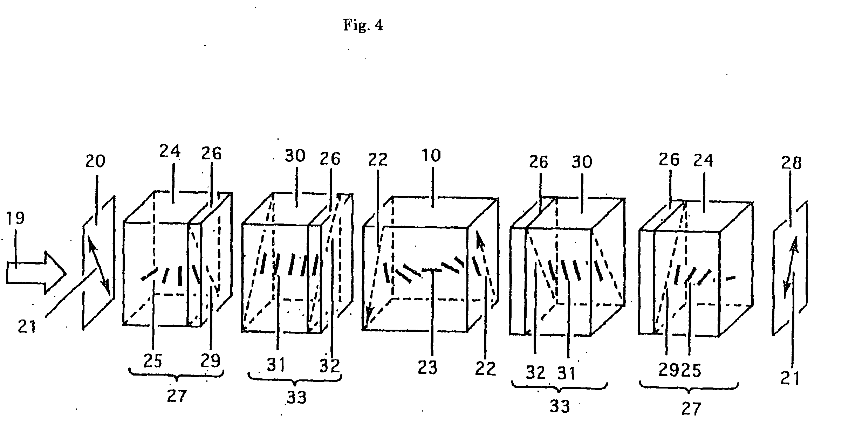

In the contrast ratio improving method of the invention, at least two PLLC optical films may be combined and used, as the case may be, to obtain better results. Planar orientation means that such a state that, in the layer 30 comprising a liquid crystalline compound being on the base film 26 that supports the liquid crystal layer, the liquid crystal molecules 31 are approximately planarly oriented (in parallel to each other) on both the side of the base film and the side of the interface with air, as shown in Fig. 4.

For the approximately planar orientation in the invention, it is desirable that the liquid crystal molecules are parallel to the film surface as completely as possible. However, so far as the liquid crystal molecules are parallel thereto to such a degree that they attain the effect of the invention, there will be no problem. In general, the inclination (tilt angle) of the liquid crystal molecules to the film surface may fall between 0 and 5 degrees, preferably between 0 and 3 degrees, more preferably between 0 and 1 degree.

The PLLC optical films of the type are known, for example, described in Japanese Patent Laid-Open No.H12-98133 (JP2000-98133A).

Preferably, at least two PLLC optical films are disposed between the polarizers and are arrayed so that their slow axes are approximately perpendicular to each other so as not to cause a retardation in the direction normal to the film surfaces. Also preferably, the PLLC optical films are combined with the HBLC optical films mentioned above in such a manner that the slow axes of the PLLC optical films are approximately parallel or perpendicular to those of the HBLC optical films for more effectively improving the contrast ratio of the image formed.

The order of positioning these PLLC optical films and HBLC optical films is not specifically defined, but in general, it is desirable that the PLLC optical films are arrayed on the side of the liquid crystal layer of each HBLC optical film.

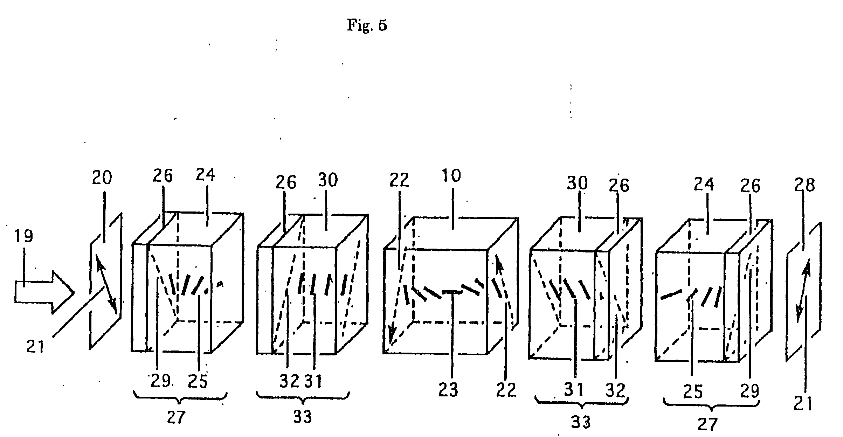

One embodiment of this array is shown in Fig. 5, in which the PLLC optical films 33 are arrayed so that the liquid crystal cell 10 is sandwiched therebetween and that the slow axes 32 of the films are perpendicular to each other, and the slow axis 29 of each HBLC optical film 27 is perpendicular to the slow axis 32 of the optical film 33 adjacent to that optical film 27.

As the case may be, it is also desirable in the invention that at least two PLLC optical films are so arrayed that their slow axes are nearly parallel or perpendicular to the absorption axes of the polarizers and are also nearly parallel or perpendicular to the slow axes of the HBLC optical films. One embodiment of this array is shown in Fig. 4, in which the PLLC optical films 33 are arrayed so that the liquid crystal cell 10 is sandwiched therebetween with the base film 26 of each optical film 33 facing the liquid crystal cell 10 and that the slow axes 32 of the two optical films 33 are perpendicular to each other, the slow axis 32 of the optical film 33 nearer to the polarizer 20 is made perpendicular to the absorption axis 20 of the polarizer 20, the slow axis 32 of the optical film 33 nearer to the polarizer 28 is made perpendicular to the absorption axis 21 of the polarizer 28, and the slow axis 29 of each HBLC optical film 27 is made perpendicular to the slow axis 32 of the optical film 33 adjacent to that optical film 27. Another embodiment is shown in Fig. 5, in which the PLLC optical films 33 are arrayed so that the liquid crystal cell 10 is sandwiched therebetween with the liquid crystal layer 30 of each optical film 33 facing the liquid crystal cell 10 and that the slow axes 32 of the two optical films 33 are perpendicular to each other, the slow axis 32 of the optical film 33 nearer to the polarizer 20 is made perpendicular to the absorption axis 21 of the polarizer 20, the slow axis 32 of the optical film 33 nearer to the polarizer 28 is made perpendicular to the absorption axis 21 of the polarizer 28, and the slow axis 29 of each HBLC optical film 27 is made perpendicular to the slow axis 32 of the optical film 33 adjacent to that optical film 27.

In the invention, it is further possible that at least two even numbers of PLLC optical films are so arrayed that the slow axes of a half of them are approximately perpendicular to the absorption axis of one polarizer and those of the other half of them are approximately parallel to the absorption axis of that polarizer, and the HBLC optical films and the PLLC optical films are so arrayed that the liquid crystal layer and the base film to support the liquid crystal layer of each optical film are alternated. One embodiment of this array is shown in Fig. 4, in which the PLLC optical films 33 are arrayed so that the liquid crystal cell 10 is sandwiched therebetween with the base film 26 of each optical film 33 facing the liquid crystal cell 10 and that the slow axes 32 of the two optical films 33 are perpendicular to each other, the slow axis 32 of the optical film 33 nearer to the polarizer 20 is made perpendicular to the absorption axis 21 of the polarizer 20, the slow axis 32 of the optical film 33 nearer to the polarizer 28 is made perpendicular to the absorption axis 21 of the polarizer 28, and the HBLC optical films 27 are so arrayed that their base films 26 each face the planar-oriented liquid crystal layer 30 of each PLLC optical film 33 adjacent thereto and that the slow axis 29 of each optical film 27 is perpendicular to the slow axis 32 of each optical film 33 adjacent thereto. Another embodiment is shown in Fig. 5, in which the PLLC optical films 33 are arrayed so that the liquid crystal cell is sandwiched therebetween with the planar-oriented liquid crystal layer 30 of each optical film 33 facing the liquid crystal cell 10 and that the slow axes 32 of the two optical films 33 are perpendicular to each other, the slow axis 32 of the optical film 33 nearer to the polarizer 20 is made perpendicular to the absorption axis 21 of the polarizer 20, the slow axis 32 of the optical film 33 nearer to the polarizer 28 is made perpendicular to the absorption axis 21 of the polarizer 28, and the HBLC optical films 27 are so arrayed that their hybrid-oriented liquid crystal layers 24 each face the base film 26 of each optical film 33 adjacent thereto and that the slow axis 29 of each optical film 27 is perpendicular to the slow axis 32 of each optical film 33 adjacent thereto.

Preferably, the PLLC optical films for use in the invention all have the same retardation value for more effectively improving the contrast ratio of the image to be formed. The preferred retardation value of each one of the optical films falls between 20 and 200 nm, more preferably between 50 and 150 nm or so in the direction normal to the film surface.

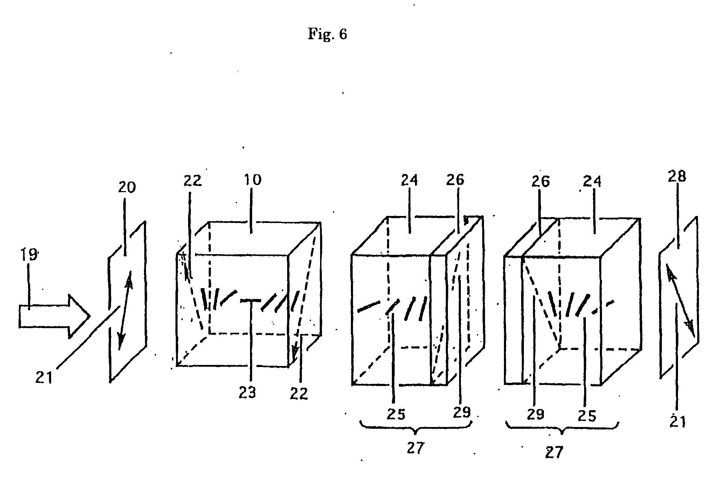

The contrast ratio improving method of the invention is not limited to O-mode cases as shown in Fig. 2 to Fig. 5 in which the absorption axis 21 of the polarizer is parallel to the rubbing direction 22 of the liquid crystal cell, but may apply also to E-mode cases in which the absorption axis 21 of the polarizer is perpendicular to the rubbing direction 22 of the liquid crystal cell. One example of the latter cases is shown in Fig. 6, in which the orientation direction of the liquid crystal molecules 25 in the liquid crystal layer 24 of the two HBLC optical films 27 is turned to 180° from that in Fig. 2 while the slow axes 29 of the two films are still perpendicular to each other.

Not specifically defined, the base film of the liquid crystal layer-having optical films for use in the invention may be any one of good transparency not detracting from the contrast ratio improving effect of the method of the invention. The base film of the type includes, for example, plastic films of very low birefringence. Examples of plastic films of very low birefringence are those of cellulose derivatives such as triacetyl cellulose, norbornene derivatives or amorphous polyolefins having a low intrinsic birefringence, and those of which the birefringence has been controlled by mechanical treatment such as biaxial stretching. If desired, monoaxially-stretched plastic films may be used for the PLLC optical films in the invention. Preferably, the thickness of the plastic films falls between 50 and 200 µm or so in view of their workability in forming a liquid crystal layer thereon.

Also preferably, the base film of the liquid crystal layer-having optical films for use in the invention satisfies nx ≥ ny > nz, and nz - {(nx + ny)/2} < 0, in which nx represents the refractive index of the film in the direction of the slow axis in the film surface, ny represents the refractive index of the film in the direction of the fast axis in the film surface, and nz represents the refractive index of the film in the direction of the thickness of the film. Using the base film of the type, the contrast ratio improving method of the invention is more effective. The base film of the type includes, for example, plastic films of cellulose derivatives such as triacetyl cellulose, diacetyl cellulose or cellulose nitrate. Of those, triacetyl cellulose films are especially preferred in view of their practicability. The thickness of the plastic films varies, depending on their workability in forming a liquid crystal layer thereon and on the necessary retardation for maximizing the contrast ratio improving effect that is calculated from the birefringence to occur in accordance with the tilt angle to the direction normal to the film surface. Therefore, it could not be indiscriminately defined, but is preferably from 30 to 150 µm or so.

The liquid crystalline compound to form the hybrid-oriented liquid crystal layer for use in the invention includes, for example, thermotropic liquid crystalline compounds that have a liquid crystalline property within a specific temperature range, and lyotropic liquid crystalline compounds of which the solutions have a liquid crystalline property within a specific concentration range. Especially in many cases, different types of liquid crystalline compounds are mixed to prepare thermotropic liquid crystal that may have a liquid crystalline property in a broad temperature range. The liquid crystalline compounds may have a low molecular weight or a high molecular weight, and those of low molecular weight may be mixed with any others of high molecular weight. While in liquid crystalline condition, it is desirable that the compounds have a nematic phase. Examples of the compounds of the type are liquid crystalline compounds described in Japanese Patent Laid-Open No. 10-339813. Also preferably, the liquid crystalline compounds for use in the invention are polymerizable or crosslinkable by exposure to UV rays or heat in order that their oriented condition can be well fixed. Preferred examples of the liquid crystalline compounds of the type are those having a polymerizable group such as (meth)acryloyl, epoxy or vinyl group, and those having a crosslinkable functional group such as amino or hydroxyl group. For example, they are discotic liquid crystal such as typically triphenylene derivatives described in Japanese Patent Laid-Open No. 7-325221, and low-molecular liquid crystal of a mixture of two liquid crystalline compounds (Compounds (1) and (2) in the Example mentioned hereinunder) described in W097/44703. These compounds may be polymerized or crosslinked by exposure to UV rays or heat in the presence of a polymerization initiator or a crosslinking agent while they are kept oriented, and the thus-obtained, optical anisotropic products are still kept oriented in a predetermined condition irrespective of the ambient temperature change and any others around them. The liquid crystalline compound or composition to form the planar-oriented liquid crystal layer for the PLLC optical films for use in the invention is not also specifically defined so far as it forms planar orientation. For example, it includes mixtures of liquid crystalline compounds and surfactants described in Japanese Patent Laid-Open No.H12-98133. One example of the composition is mentioned below.

It is a polymerizable composition that comprises:
a) from 10 to 50 % by weight of one or two polymerizable compounds of the following formula (Ia), and from 5 to 35 % by weight of one or two polymerizable compounds of the following formula (Ib): 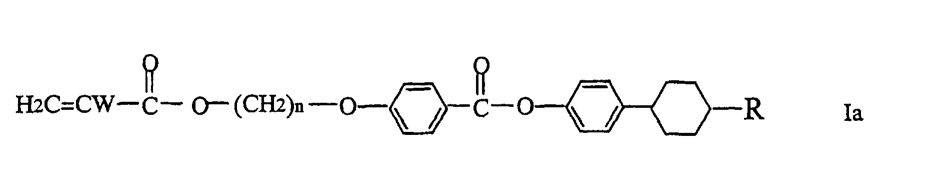 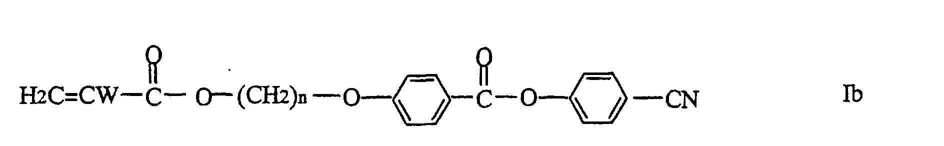 wherein W represents H or CH₃; n represents an integer of from 3 to 6; and R represents an alkyl or alkoxy group having from 1 to 8 carbon atoms;
b) from 15 to 60 % by weight of a polymerizable compound of the following formula (II): 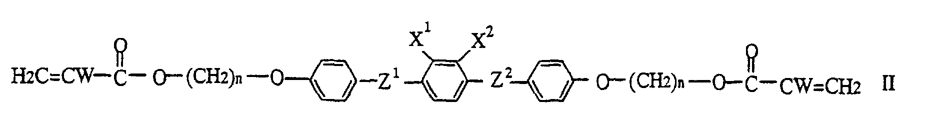 wherein W represents H or CH₃; n represents an integer of from 3 to 6; Z¹ and Z² each independently represent -COO- or -OCO-; and X¹ and X² each independently represent H or CH₃;
c) from 0.1 to 8 % by weight of an optical initiator;
d) from 50 to 2500 ppm of a nonionic fluoroalkyl-alkoxylate surfactant selected from the following formulae (III) and (IV):

   CₙF₂ₙ₊₁SO₂N(C₂H₅)(CH₂CH₂O)ₓCH₃ (III)

   CₙF₂ₙ₊₁(CH₂CH₂O)ₓH (IV)

   wherein n represents an integer of from 4 to 12; and x represents an integer of from 5 to 15; and optionally
e) from 5 to 50 % by weight of one or more compounds of the following formula (V): 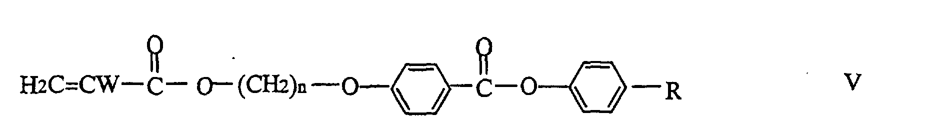
wherein W, n and R have the same meanings as in formula (I).

As a method for preparing the HBLC optical films and the PLLC optical films for use in the invention, for example, a base film is directly, or after an alignment layer such as a polyvinyl alcohol derivative or polyimide has been formed thereon, uniformly rubbed with a roller covered with a velvet cloth - this is rubbing treatment, and thereafter a solution prepared by dissolving liquid crystalline compounds in a suitable solvent is coated to the base film, and then dried under heat. In case where the liquid crystalline compounds are polymerizable or crosslinkable by exposure to UV rays or heat, they may be polymerized or crosslinked by exposing them to UV rays or heat in the presence of a polymerization initiator or a crosslinking agent while they are kept their liquid crystalline condition. The method of applying the solution of liquid crystalline compounds to the base film is not specifically defined. However, since the thickness of the liquid crystal layer formed on the base film has some influence on the retardation value of the optical films produced, it is desirable that the solution is applied to the base film so as to form a uniform liquid crystal layer thereon. As the coating method, for example, employable is any of microgravure coating, gravure coating, wire bar coating, dipping, spraying or meniscus coating. The thickness of the liquid crystalline compound layer varies, depending on the desired retardation value of the optical films to be produced; and the retardation value also varies depending on the birefringence of the liquid crystalline compounds used. Preferably, the thickness of the layer falls between 0.05 and 10 µm, more preferably between 0.1 and 5 µm or so.

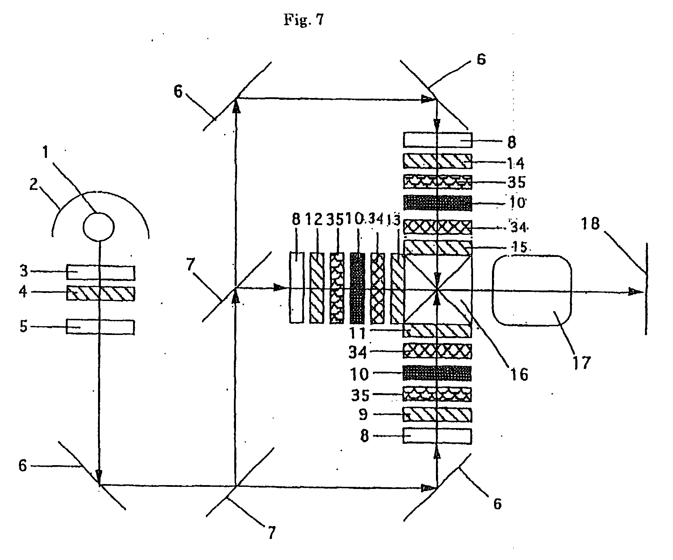

The contrast ratio improving method of the invention may be attained, for example, by setting as shown in the Fig 7 the optical structure 34 mentioned hereinafter in the conventional liquid crystal projector of Fig. 1. That is, two HBLC optical films 27 are arrayed as shown in Fig. 2 (so that their film surfaces face each other), and they are stuck to the two surfaces of a glass plate with an adhesive or the like (or two optical films 27 that are arrayed as shown in Fig. 2 are laminated with an adhesive or the like and the resulting laminate is stuck onto one surface of a glass plate also with an adhesive or the like) to fabricate an optical structure 34. Thus fabricated, the optical structure 34 is disposed between the liquid crystal cell 10 and the color elliptical polarizer 11, between the liquid crystal cell 10 and the color elliptical polarizer 13, and between the liquid crystal cell and the color elliptical polarizer 15, with the arrangement shown in Fig. 2. These polarizers are not limited to such color elliptical polarizers that correspond to the respective wavelength ranges, but may also be any other polarizers that comprise multiple dichromatic dyes having different absorption wavelength ranges, multi-iodine compound or polyene-structured polymers so as to correspond to the entire visible region. In addition, the color elliptical polarizers 8 and 11, 8 and 13, and 8 and 15 may be combined with the HBLC optical films 27 and optionally with the PLLC optical films 33, as in any of Fig. 3 to Fig. 6, by which the contrast ratio improving method of the invention may also be attained. The optical films may be separately disposed, or may be laminated with a glue or an adhesive, and they may be stuck onto one or both surfaces of a glass plate also with a glue or an adhesive. Further, each optical film may be stuck to the polarizer with a glue or an adhesive; or may be stuck to the liquid crystal cell also with a glue or an adhesive. In particular, the polarizers are generally constructed by making a monoaxially-stretched polyvinyl alcohol film adsorb a dichromatic dye followed by sandwiching it between surface-saponified triacetyl cellulose films with an adhesive. Therefore, the liquid crystal layer for use in the invention may be directly formed on the triacetyl cellulose film of each polarizer on the side of the liquid crystal cell. In that constitution, the base film can be omitted. In case where the surface of each film, the base film and the glass plate are on the side of the interface with air, the surfaces of these members may be processed for antireflection to thereby control the surface reflection on them. This is favorable since the light transmittance through the structure is increased.

Preferably, the optical films and the optical structures of the invention are used for the light that has been collected through a microlens array. Therefore, the optical film or the optical structure of the invention is preferably disposed after a microlens array (on the light-emitting side thereof). Disposing the liquid crystal layer-having optical films in the manner as above, one can obtain the liquid crystal projector of the invention.

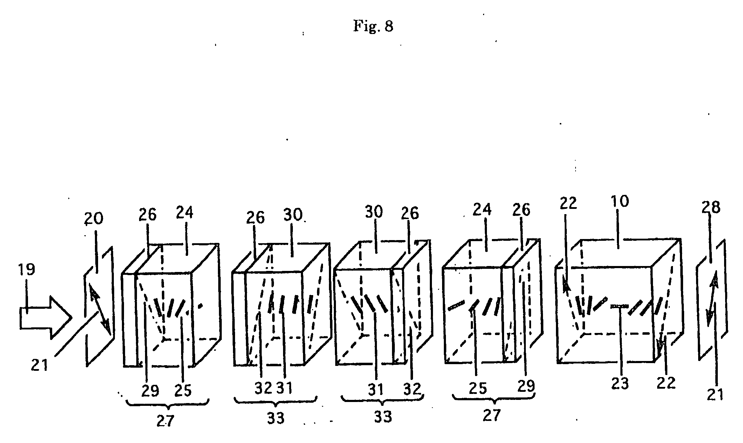

The composite optical film of the invention, which comprises at least a pair of a HBLC optical film and a PLLC optical film and in which the PLLC optical films are on the side of the liquid crystal of each HBLC optical film may be fabricated in any ordinary manner, for example, by directly bonding each PLLC optical film to the side of the liquid crystal of each HBLC optical film with a suitable adhesive . If desired, any other transparent optical film may be disposed between the two films, via which the two films may be bonded to each other. The optical film of the invention that comprises at least a pair of HBLC optical film and a PLLC optical film may be constructed as shown in Fig. 5 or Fig. 8, in which the HBLC optical films 27 and the PLLC optical films 33 are arrayed as illustrated therein. Having the constitution, the composite optical film can be used in a liquid crystal projector, in which the film improves the contrast ratio of the image formed and projected on a screen. As the case may be, the composite optical film may be stuck to and integrated with a polarizer; or it may be stuck to a support.

Fig. 1 to Fig. 9 are to illustrate some embodiments of the invention, to which, however, the invention is not limited.

### EXAMPLES

The invention is described more concretely with reference to the following Examples and Comparative Examples.

### Example 1:

A mixture of the following liquid crystalline compounds (1) and (2) both having the ability to undergo hybrid orientation :

### Compound (1)

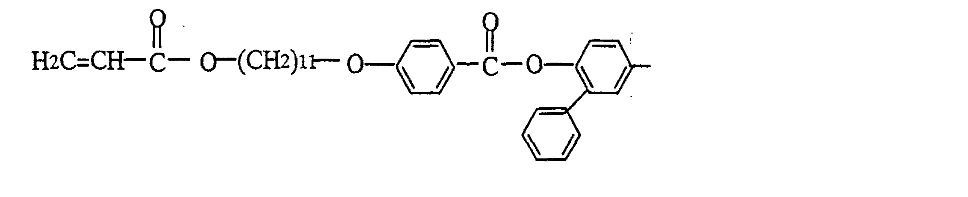

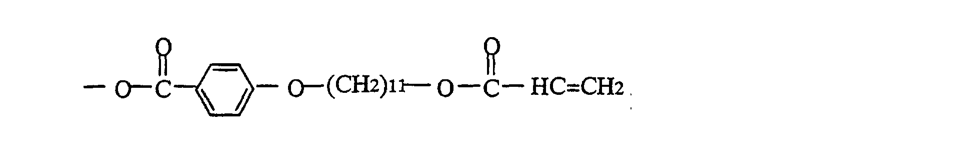

### Compound (2)

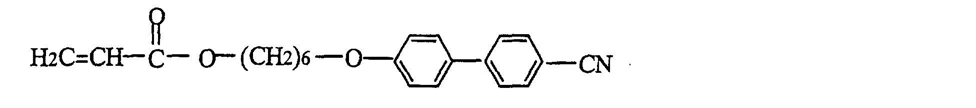

was prepared, comprised of 23.5 parts by weight of the compound (1) and 70.5 parts by weight of the compound (2). This was dissolved in a mixed solvent of 174.7 parts by weight of toluene and 58.3 parts by weight of cyclohexanone, along with 6 parts by weight of a photopolymerization initiator, Irgacure 907 (trade name, from Ciba-Geigy) added thereto, to prepare a solution having a solid concentration of 30 %. Next, one surface of a triacetyl cellulose film having a thickness of 80 µm (its refractive index in the direction of the slow axis thereof, nx = 1.49522; its refractive index in the direction of the fast axis thereof, ny = 1.49517; its refractive index in the direction of the thickness thereof, nz = 1.49461) was rubbed with a rubbing roller having a diameter of 100 mm and covered with a rubbing rayon cloth (YA-20-R, commercial number, from Yoshikawa Kako). In this treatment, the rotating speed of the rubbing roller is 120 m/min; the contact length of the film with the roller is 30 mm; the film traveling speed is 5 m/min; and the traveling film tension is 3 kgf/cm. Next, the solution of the liquid crystalline compounds was applied onto the rubbed surface of the thus-rubbed film, using amicrogravure coater. In this step, the film traveling speed is 5 m/min; and the dry thickness of the layer thus formed on the film is about 1 µm. Then, the solvent was removed by heating the coated film, which was then exposed to a high-pressure mercury lamp (120 W/cm) to cure the coating layer. The process gave an HBLC optical film for use in the invention. The retardation value of the optical film in the direction normal to its surface was 50 nm. Next, the surface of the liquid crystal layer of the optical film was subjected to antireflection treatment. Two optical films thus prepared were stuck to both surfaces of a glass plate with an adhesive, with the triacetyl cellulose film of each optical film facing the glass plate, as in the array of Fig. 2. The thus-obtained optical structure was disposed between each liquid crystal cell and each light-emitting color elliptical polarizer in a liquid crystal projector as shown in Fig. 7. Thus fabricated, this is a liquid crystal projector of the invention. Using the liquid crystal projector, the contrast ratio of the image projected onto a 60-inch screen was measured with a color illuminometer (from Yokogawa Electric). This was carried out in accordance with the "Guideline for Method and Condition for Colorimetry with Liquid Crystal Projector" (edited by the Office Appliances Industry Association of Japan, established in June 1999). Thus measured, the contrast ratio was 450.

### Comparative Example:

A liquid crystal projector was constructed in the same manner as in Example 1, for which, however, the optical structure fabricated in Example 1 was not used. Its constitution corresponds to that of Fig. 1. The contrast ratio of the image projected by it was measured. Thus measured, the contrast ratio was 300.

As is obvious from the comparison between Example 1 and Comparative Example, it is understood that the contrast ratio is significantly increased according to the method of the invention.

### Example 2 (composite optical film of the invention):

42.3 parts by weight of the following compound (3), 32.9 parts by weight of the following compound (4), 18.8 parts by weight of the following compound (5): 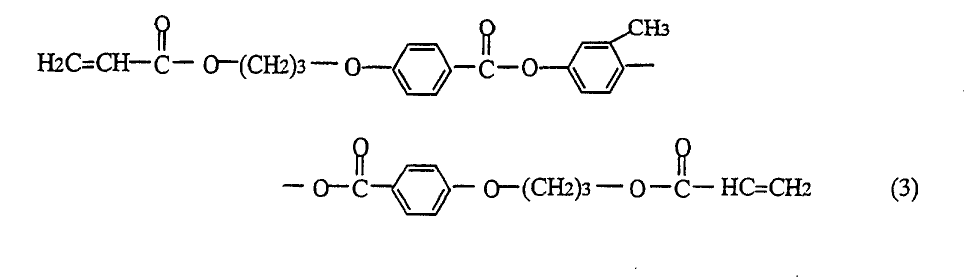 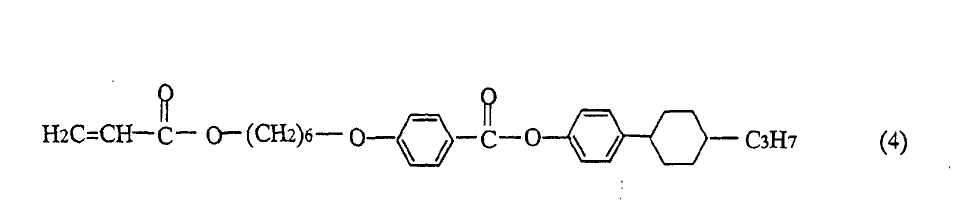 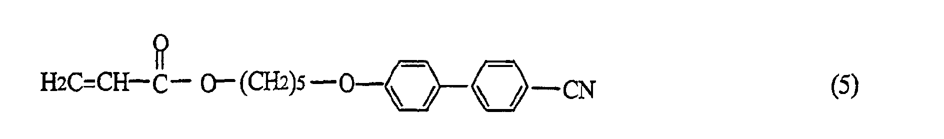 and 6 parts by weight of Irgacure 907 (trade name, fromCiba-Geigy) and Florad FC-171 (trade name, from 3M) were dissolved in a mixed solvent of 174.4 parts by weight of toluene and 58.3 parts by weight of cyclohexanone, to which was further added 1000 ppm, relative to the solid content of the solution, of the nonionic fluorocarbon surfactant, Florad FC-171 (trade name, from 3M) to prepare a solution having a solid concentration of 30 %. Next, in the same manner as in Example 1, the solution was applied onto a rubbed triacetyl cellulose film, the solvent was removed by heating the film, and the film was exposed to a high-pressure mercury lamp (120 W/cm) to cure the coating layer thereon. The process gave a PLLC optical film for use in the invention. The retardation value of the optical film in the direction normal to the film surface was 70 nm. Next, using an adhesive, the PLLC optical film was laminated with the HBLC optical film fabricated in Example 1 in such a manner that the liquid crystal layer surface of the PLLC optical film faces the triacetyl cellulose surface of the HBLC optical film and the slow axes of the two films are perpendicular to each other. The process gave a contrast ratio-improving composite optical film of the invention. In addition, also using an adhesive, the contrast ratio-improving composite optical film was further laminated with a dye stuff type polarizer film SHC-13U (trade name, from Polatechno Co., Ltd) on the side of the liquid crystal layer surface of the HBLC optical film thereof in such a manner that the absorption axis of the polarizer film is parallel to the slow axis of the HBLC optical film. The process gave a polarizer film-having, contrast ratio-improving composite optical film.

### Example 3:

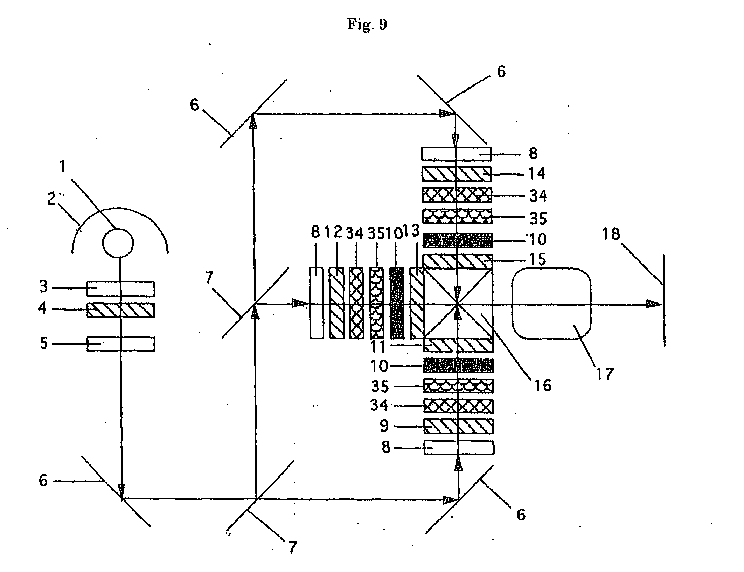

Fabricated in the same manner as in Example 2, two HBLC optical films (27 in Fig. 8) both having a retardation value of 50 nm and two PLLC optical films (33 in Fig. 8) both having a retardation value of 75 nm were laminated as in the array of Fig. 8, using an adhesive. In the resulting array, the slow axis of each film is perpendicular to the slow axis of the neighboring HBLC or PLLC optical film. The process gave a contrast ratio-improving composite optical film of the invention. Using an adhesive, this film was stuck to every light-receiving color elliptical polarizer film (9, 12, 14 in Fig. 9) that had been stuck on a glass plate (that is, the retardation film is disposed on the light-receiving side of the structure) to construct an optical structure. In this process, the array of every light-receiving color elliptical polarizer film and the contrast ratio-improving composite optical film of the invention to be stuck thereto is as shown in Fig. 8, in which the absorption axis 21 of each polarizer film is parallel to the slow axis 29 of each HBLC optical film that neighbors the polarizer film. Thus constructed, the optical structures were disposed in a liquid crystal projector as shown in Fig. 9. The process gave a liquid crystal projector of the invention. Using this liquid crystal projector, the contrast ratio of the image projected onto a screen was measured in the same manner as in Example 1. Thus measured, the contrast ratio was 340.

### INDUSTRIAL APPLICABILITY

The present invention is a method for improving the contrast ratio of the display image projected on a screen from a liquid crystal projector that comprises at least a light source, an electrode-having, twisted nematic liquid crystal cell comprising at least one nematic liquid crystal, and two polarizers disposed so that the liquid crystal cell is sandwiched between them, which is characterized in that at least two HBLC optical films are so arrayed between the polarizers that the slow axes of the films are approximately perpendicular to each other so as not to cause a retardation in the direction normal to the film surfaces, and the method improves the display quality of the image to be projected on a screen. In particular, the method is especially effective for improving the contrast ratio of the image to be projected on a screen after light collection through microarrays.

## Claims

1. A method for improving the contrast ratio of the display image projected on a screen from a liquid crystal projector that comprises at least a light source, an electrode-having, twisted nematic liquid crystal cell (hereinafter referred to as a TN liquid crystal cell), and two polarizers disposed so that the liquid crystal cell is sandwiched between them, which is **characterized in that** at least two, hybrid-oriented liquid crystal layer-having optical films (hereinafter referred to as HBLC optical films) are so arrayed between the polarizers that the slow axes of the films are approximately perpendicular to each other so as not to cause a retardation in the direction normal to the film surfaces.

2. The contrast ratio improving method as claimed in claim 1, wherein at least two HBLC optical films are so arrayed that their slow axes are approximately parallel or perpendicular to the absorption axis of each polarizer.

3. The contrast ratio improving method as claimed in claim 2, wherein even numbers of HBLC optical films are so arrayed that the slow axes of a half of them are approximately perpendicular to the absorption axis of one polarizer and those of the other half of them are approximately parallel to the absorption axis of that polarizer.

4. The contrast ratio improving method as claimed in claim 3, wherein even numbers of HBLC optical films are so arrayed that the slow axes of a half of them are approximately perpendicular to the absorption axis of one polarizer and those of the other half of them are approximately parallel to the absorption axis of that polarizer, and each half of the optical films are so arrayed that the liquid crystal layer and the base film to support the liquid crystal layer of each optical film are alternated.

5. The contrast ratio improving method as claimed in any one of claims 1 to 4, wherein the HBLC optical films have the same retardation value:

6. The method for improving the contrast ratio of the display image projected on a screen as claimed in claim 1, wherein at least two, planar-oriented liquid crystal layer-having optical films (hereinafter referred to as PLLC optical films) are so arrayed between the polarizers that the slow axes of the films are approximately perpendicular to each other so as not to cause a retardation in the direction normal to the film surfaces, and that they are approximately parallel or perpendicular to the slow axes of the HBLC optical films.

7. The contrast ratio improving method as claimed in claim 6, wherein at least two PLLC optical films are so arrayed that their slow axes are approximately parallel or perpendicular to the absorption axis of each polarizer.

8. The contrast ratio improving method as claimed in claim 7, wherein even numbers of PLLC optical films are so arrayed that the slow axes of a half of them are approximately perpendicular to the absorption axis of one polarizer and those of the other half of them are approximately parallel to the absorption axis of that polarizer, and the HBLC optical films and the PLLC optical films sandwiched between the TN liquid crystal cell and one polarizer are so arrayed that the liquid crystal layer and the base film to support the liquid crystal layer of each optical film are alternated.

9. The contrast ratio improving method as claimed in any one of claims 6 to 8, wherein the PLLC optical films have the same retardation value.

10. The contrast ratio improving method as claimed in any one of claims 1 to 9. wherein the base film to support the liquid crystal layer satisfies nx ≥ ny > nz, and nz - {(nx + ny)/2} < 0, in which nx represents the refractive index of the film in the direction of the slow axis in the film surface, nyrepresents the refractive index of the film in the direction of the fast axis in the film surface, and nz represents the refractive index of the film in the direction of the thickness of the film.

11. The contrast ratio improving method as claimed in claim 10, wherein the base film to support the liquid crystal layer is a triacetyl cellulose film.

12. The contrast ratio improving method as claimed in any one of claims 1 to 9, wherein the compound to form the liquid crystal layer is a thermotropic liquid crystalline compound or a lyotropic liquid crystalline compound.

13. The contrast ratio improving method as claimed in claim 12, wherein the compound to form the liquid crystal layer is a UV-curable or thermosetting liquid crystalline compound.

14. A liquid crystal projector that uses the contrast ratio improving method of claims 1 to 13.

15. An optical system for improving the contrast ratio of the display image projected on a screen from a liquid crystal projector, which has a TN liquid crystal cell and at least two HBLC optical films between polarizers and which is **characterized in that** the films are so arrayed that their slow axes are approximately perpendicular to each other so as not to cause a retardation in the direction normal to the film surfaces.

16. A composite optical film for contrast ratio improvement, which comprises at least a pair of HBLC optical films and a pair of PLLC optical films.
